# EUROPÄISCHE PATENTSCHRIFT

(11) **EP 3 228 535 B1**
(45) Veröffentlichungstag und Bekanntmachung des Hinweises auf die Patenterteilung: **23.09.2020**
(21) Anmeldenummer: 17164001.4
(22) Anmeldetag: 30.03.2017
(51) Int. Cl.: B64C 1/18, B64C 1/06, B64C 1/00

(54) **DEKOMPRESSIONSVORRICHTUNG**
DECOMPRESSION DEVICE
DISPOSITIF DE DÉCOMPRESSION

(30) Priorität: 08.04.2016 DE 102016205894
(43) Veröffentlichungstag der Anmeldung: 11.10.2017
(73) Patentinhaber: Premium AEROTEC GmbH, 86179 Augsburg (DE)
(72) Erfinder: ZEEB, Sergej, 86199 Augsburg (DE); IRIMIE, Sergiu, 86179 Augsburg (DE); LEIDESCHER, Matthias, 86343 Königsbrunn (DE); TYROLLER, Peter, 86556 Kühbach (DE)
(74) Vertreter: LKGLOBAL Lorenz & Kopf PartG mbB Patentanwälte

(56) Entgegenhaltungen:
- EP-A1- 0 420 306
- EP-B1- 1 976 752
- DE-A1-102009 025 382
- DE-B3-102004 009 017
- US-A- 4 383 666
- US-A1- 2006 048 449

## Beschreibung

Die Erfindung betrifft eine Dekompressionsvorrichtung mit einer Tragstruktur und mit wenigstens einem an einer Tragstruktur angeordneten Dekompressionsglied, welches bei einem Differenzdruckereignis vorbestimmbarer Höhe eine Öffnung in der Tragstruktur als Verbindung zwischen zwei Volumina freigibt, wobei das Dekompressionsglied zwischen einer die Öffnung verschließenden Haltestellung und einer die Öffnung freigebenden Freigabestellung bewegbar ist, und mit einer Verriegelungsanordnung, welche das Dekompressionsglied bei Gebrauch in der Haltestellung festlegt.

Solche Dekompressionsvorrichtungen sind bekannt und werden eingesetzt, um einen Druckausgleich von Luftverhältnissen voneinander getrennter Volumina in Luftfahrzeugen herzustellen. So kennt man dergleichen Dekompressionsvorrichtungen etwa aus der DE 10 2009 025 382 A1, der DE 10 2004 009 017 B3, der EP 1 976 752 B1 oder der US 4,383,666 A. Zwischen getrennten Volumina in Innern eines Luftfahrzeugrumpfs, etwa zwischen einer Fahrzeugkabine als Passagierraum und einem Frachtraum, ist es notwendig, einen Druckausgleich herstellen zu können. Tragstrukturen können etwa Wandabschnitte oder Bodenteile sein. Wünschenswert ist dabei eine flexible Auslegung dahingehend, dass für unterschiedliche Bedingungen eine Dekompressionsvorrichtung angepasst zur Verfügung gestellt werden kann.

Es besteht daher die Aufgabe, die erwähnten Dekompressionsvorrichtungen derart weiterzubilden, dass sie günstig herzustellen, einfach zu montieren und zu warten sind, und bei geringem Gewicht eine flexible Verriegelung und Auslösung gewährleisten.

Diese Aufgabe wird erfindungsgemäß durch die Merkmale des Anspruchs 1 gelöst. Die Lösung besteht demnach insbesondere darin, dass die Verriegelungsanordnung mit wenigstens einem Verriegelungselement versehen ist, welches an der Tragstruktur angeordnet ist, und außerdem das Dekompressionsglied durch das Verriegelungselement über Zusammenwirken mit einem Luftführungsteil der Dekompressionsvorrichtung, welches nachgiebig und/oder federelastisch ausgebildet ist und in Haltestellung in Richtung des Dekompressionsglieds gekrümmt oder gebogen ist, mittelbar in der Haltestellung gehalten ist. Bei der erfindungsgemäßen Dekompressionsvorrichtung ist das Luftführungsteil zur Bildung von Kanälen für Luftströmungen als ein im Wesentlichen flaches, plattenartiges Bauteil ausgebildet, dessen festes Ende mit der Tragstruktur verbunden ist, das Verriegelungselement der Verriegelungsanordnung ist durch ein z-förmiges Profil gebildet, welches mit dem Wandabschnitt wenigstens einen Eingriff bildet. Das Luftführungsteil weist an seinem freien Ende ein Riegelteil auf, das in der Haltestellung mit dem Verriegelungselement der Verriegelungsanordnung in Eingriff steht. Bei Auslösen der Verriegelungsanordnung geraten das Verriegelungselement und das Riegelteil außer Eingriff. Dabei ist das Riegelteil durch einen Zapfen oder dergleichen von dem freien Ende des Luftführungsteils weg ragenden Vorsprung gebildet, der in Haltestellung in den durch das Profil und die Tragstruktur gebildeten Eingriff des Verriegelungselements greift.

Hierdurch ist mit einer einfach aufgebauten Verriegelungsanordnung eine Dekompressionsvorrichtung realisiert, die günstig herzustellen, einfach zu montieren und zu warten ist, und die bei geringem Gewicht eine unkomplizierte Handhabung und Auslösung gewährleistet. Wie weiter unten deutlich werden wird, kann diese Dekompressionsvorrichtung beispielsweise mit wenigen Anlenkstellen bzw. Scharnieren auskommen, und auf eine Verwendung von Federn zur Bewegung von Verriegelungselementen gänzlich verzichten. Hierdurch löst die Dekompressionsvorrichtung mit der Verriegelungsanordnung korrekt aus und ist wenig fehler- und versagensanfällig. Weitere vorteilhafte Merkmale beinhalten die Unteransprüche.

In einer vorteilhaften Ausführungsform kann bei der erfindungsgemäßen Dekompressionsvorrichtung das Verriegelungselement der Verriegelungseinrichtung an einer Seite der Tragstruktur angeordnet sein, insbesondere an derjenigen Seite, in deren Richtung das Dekompressionsglied in die Freigabestellung bewegbar oder bewegt ist. Hierdurch lässt sich das Dekompressionsglied mittels Druckbeaufschlagung seitens der Verriegelungsanordnung gegen das Eigengewicht des Dekompressionsglieds oder eine Vorspannung halten, so dass nicht die Gefahr des Nachgebens von unter Zugspannung stehenden Komponenten auftritt.

In einer weiteren vorteilhaften Ausbildung kann an der erfindungsgemäßen Dekompressionsvorrichtung das Verriegelungselement an der Tragstruktur befestigt oder festgehalten sein und/oder an der Tragstruktur angeformt sein oder als Teil der Tragstruktur mit dieser integral ausgebildet sein, wodurch an der ohnehin starren Tragstruktur ein ebenso starres oder in engen Grenzen geringfügig nachgiebiges Widerlager als Schloss der Verriegelungsanordnung vorgesehen ist. Ein solches Teil der Verriegelungsanordnung ist mithin sowohl bei Erstellung der Tragstruktur ohne größeren Aufwand einplanbar und auch nachträglich anzubringen, was gegebenenfalls auch eine Nachrüstung der Dekompressionsvorrichtung vereinfacht.

Bei der erfindungsgemäßen Dekompressionsvorrichtung ist das Verriegelungselement der Verriegelungsanordnung durch ein Z-förmiges Profil gebildet, welches mit dem Wandabschnitt wenigstens einen Eingriff bildet. Ein solches Profil kann etwa bevorzugt durch eine Öffnung in Richtung des Dekompressionsglieds hin eine Art Steckrichtung für ein steckbares Riegelstück des Verriegelungsanordnung bilden, dessen Längserstreckung gesteckt dann im Wesentlichen parallel zu Tragstruktur bzw. Dekompressionsglied verliefe. Es sind aber auch andere Profilierungen mit verschieden geformten Öffnungen denkbar. Insbesondere kann an dem Eingriff das Verriegelungselement mit einem Eingriffsteil in Gebrauchsstellung als Gegenpart der Verriegelungsanordnung eine Steck-, Schnapp- oder Rastverbindung eingehen, die unter Beaufschlagung der Dekompressionsvorrichtung mit einer Druckdifferenz lösbar vorgesehen ist. Es können an dem Profil beispielsweise auch mehrere Eingriffe vorgesehen sein, die mehrere Verbindungen eingehen können.

In einer anderen zweckmäßigen Weiterbildung der Dekompressionsvorrichtung kann die Verriegelungsanordnung mit einer Mehrzahl von Verriegelungselementen vorgesehen sein, die an der Tragstruktur beabstandet, insbesondere gleichmäßig beabstandet angeordnet sind, so dass die auf das Dekompressionsglied ausgeübte Haltekraft gleichmäßig verteilt ist oder umgekehrt, die durch das Dekompressionsglied ausgeübte Gegenkraft gleichmäßig in die Tragstruktur eingeleitet werden kann.

Eine vorteilhafte Ausbildung der Dekompressionsvorrichtung kann wenigstens ein Dekompressionsglied aufweisen, welches zwischen der Haltestellung und der Freigabestellung verschwenkbar vorgesehen ist. Hierdurch ist das Dekompressionsglied in zumindest einem Bereich der Tragstruktur verschwenkbar gehalten, beispielsweise über Gelenke oder Scharniere und auf diese Weise zwar beweglich, aber mit der Tragstruktur fest verbindbar und trotzdem mit wenig Kraftaufwand bewegbar, insbesondere zwischen seiner Halte- und Freigabestellung verschwenkbar. In einer bevorzugten Weiterbildung ist das wenigstens eine Dekompressionsglied des erfindungsgemäßen Dekompressionsvorrichtung besonders einfach dadurch bewegbar, also bevorzugt verschwenkbar, dass es in der Haltestellung vorgespannt ist.

Bei der erfindungsgemäßen Dekompressionsvorrichtung ist das Luftführungsteil als ein im Wesentlichen flaches, plattenartiges Bauteil vorsehen, dessen festes Ende mit der Tragstruktur verbunden ist. Bei entsprechender Formgebung kann ein solches Bauteil an der Tragstruktur zur Bildung von Kanälen für Luftströmungen oder dergleichen eingesetzt werden. Hierbei können im Innern eines solchen Kanals zum Beispiel auch Leitbleche zur Strömungsleitung oder -ableitung vorgesehen sein. Ein Zusammenwirken mit dem Dekompressionsglied kann hierbei gegebenenfalls ohnehin zum Strömungstransport vorgesehene Strukturen zur Unterstützung des Druckausgleichs freigeben.

Bei Freigabe des Dekompressionsglieds durch Auslösen der Verriegelungsanordnung kann das Luftführungsteil hierbei in seine Grundform entspannt werden, die nicht notwendigerweise eben ist, sondern ebenfalls gekrümmt sein kann. Eine weitere Krümmung in Richtung des Dekompressionsglieds und/oder der Verriegelungsanordnung mit dem Verriegelungselement bedeutet wiederum eine Vorspannung, die die Freigabe des Druckausgleichs nach Auslösen der Verriegelungsanordnung erleichtert. Besonders bevorzugt kann das Zusammenwirken von Luftführungsteil und Dekompressionsglied in der Haltestellung dadurch erreicht werden, dass das Luftführungsteil in Gebrauchsstellung mit seinem freien Ende in Richtung des Dekompressionsglieds ragt und gegen einen ihm zugewandten Randbereich des Dekompressionsglieds drückt.

Das Luftführungsteil weist an seinem freien Ende ein Riegelteil auf, das in der Haltestellung mit dem Verriegelungselement der Verriegelungsanordnung in Eingriff steht. Bei Auslösen der Verriegelungsanordnung geraten das Verriegelungselement und das Riegelteil außer Eingriff. Das Auslösen der Freigabe des Dekompressionsglieds findet hierbei dadurch statt, dass eine zwischen den beiden Flachseiten des Luftführungsteils herrschende Druckdifferenz einen vorbestimmten Wert übersteigt, so dass die beiden Bestandteile des Verriegelungsanordnung, das Verriegelungselement und das Riegelelement, außer Eingriff geraten, da beispielsweise der höhere Druck an einer Seite des Luftführungsteils gegen die Steckrichtung des Eingriffs an einem als Z-Profil ausgebildeten Verriegelungselement wirkt. Eine erste Auswahl hinsichtlich der das Dekompressionsglied aus seiner Haltestellung auslösenden Druckdifferenz kann dabei durch die Stärke der Vorspannung des Luftführungsteils getroffen werden.

In einer weiteren vorteilhaften Ausführung der erfindungsgemäßen Dekompressionsvorrichtung kann das Luftführungsteil an seinem freien Ende ein Dämpfungsmittel aufweisen, welches seine Stirnseite entlang von deren Längserstreckung umgreift und in der Haltestellung des Dekompressionsglieds dessen Randbereich kontaktiert. Das Dämpfungsmittel trägt auf diese Weise zum Betrag der für die Auslösung aufzuwendenden Kraft bei, zum anderen, dämpft sie Kleinstbewegungen des Dekompressionsglieds durch Erschütterungen und mindert die dabei auftretende Geräuschentwicklung. Hierbei kann das Dämpfungsmittel in Anlage mit dem Dekompressionsglied über dessen Breite wenigstens einen einstellbaren Reibschluss, insbesondere genau einen einstellbaren Reibschluss bilden. Es ist auch eine Aufteilung in mehrere Reibschlussorte entlang der Breite des Dekompressionsglieds denkbar.

Bei der erfindungsgemäßen Dekompressionsvorrichtung ist das Riegelteil durch einen Zapfen oder dergleichen von dem freien Ende des Luftführungsteils weg ragenden Vorsprung gebildet ist, der in Haltestellung in einen Eingriff des Verriegelungselements greift. Der Vorsprung schließt hierbei mit dem Luftführungsteil einen Winkel ein, der beispielsweise im Wesentlichen ein rechter Winkel sein kann, trotzdem auch eine geringfügige Krümmung, etwa wie bei einem Haken, aufweisen kann.

Die exakte Auslegung des Dämpfungsteils mit seinem Reibschluss an dem Randbereich des Dekompressionsglieds sowie die Material, Stärke und Krümmung bzw. Vorspannung des Luftführungsteils liefern hierbei zusammen mit der Vorspannung des Dekompressionsglieds einen genau definierten Ansprechbereich zum Freigeben der Öffnung der Tragstruktur bei einem bestimmten Differenzdruck und insoweit die Kriterien für die Höhe des Differenzdruckereignisses selbst.

Besonders bevorzugt können bei einer anderen zweckmäßigen Weiterbildung der Dekompressionsvorrichtung das Dämpfungsmittel und das Riegelteil an dem freien Ende des Luftführungsteils angeformt sein, miteinander in Anlage stehen, miteinander verbunden sein und/oder einstückig ausgebildet sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in der Zeichnung näher erläutert. In teilweise schematisierter Darstellung zeigen hierbei die
- Fig.1: eine perspektivische Seitenansicht eines ersten Ausführungsbeispiels der erfindungsgemäßen Dekompressionsvorrichtung;
- Fig.2: einen Detailausschnitt der Darstellung der Fig.1 in perspektivisch geschnittener Ansicht, der die Verriegelungsanordnung näher zeigt; und
- Fig.3a-d: vier geschnittene Seitenansichten in zeitlicher Abfolge eines Auslösevorgangs der Verriegelungsanordnung, während dessen das Dekompressionselement aus der Haltestellung in die Freigabestellung überführt wird.

In allen Figuren sind gleiche bzw. funktionsgleiche Elemente und Vorrichtungen - sofern nichts Anderes angegeben ist - mit denselben Bezugszeichen versehen worden.

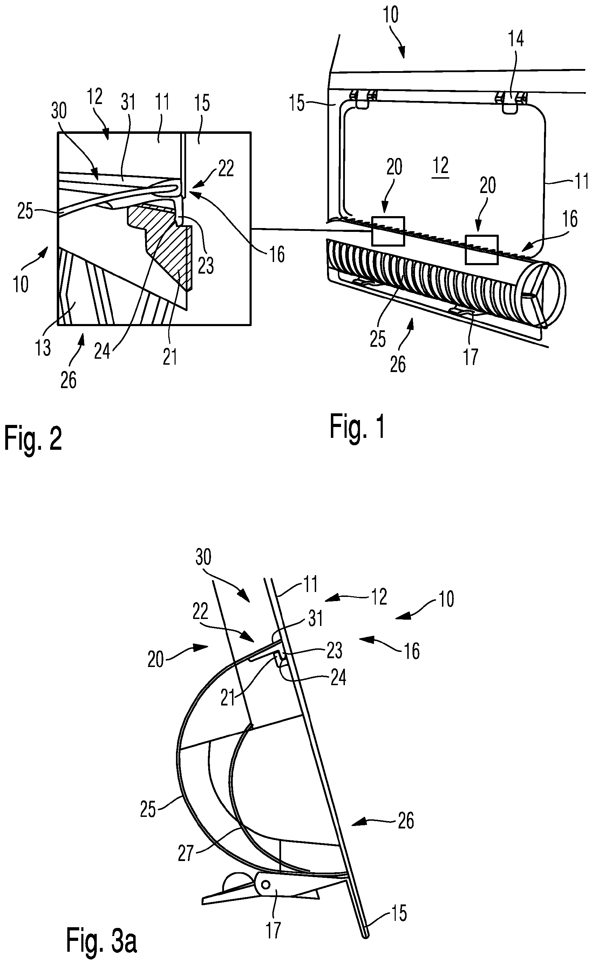

In den Fig.1-3d sind dabei jeweils im Ganzen mit 10 bezeichnete Dekompressionsvorrichtungen zu erkennen, mit jeweils einem an einer Tragstruktur 15 angeordneten Dekompressionsglied 11, welches bei einem Differenzdruckereignis vorbestimmbarer Höhe eine Öffnung 12 in der Tragstruktur 15 als Verbindung zwischen zwei Volumina freigibt, wobei das Dekompressionsglied 11 jeweils zwischen einer die Öffnung 12 verschließenden Haltestellung und einer die Öffnung 12 freigebenden Freigabestellung bewegbar ist, und mit einer Verriegelungsanordnung 20, welche das Dekompressionsglied 11 bei Gebrauch in der Haltestellung festlegt.

In den Fig.1-3d erkennt man insbesondere, dass die Verriegelungsanordnung 20 mit wenigstens einem Verriegelungselement 21 versehen ist, welches an der Tragstruktur 15 angeordnet ist und dass das Dekompressionsglied 11 durch das Verriegelungselement 21 über Zusammenwirken mit einem Luftführungsteil 25 mittelbar in der Haltestellung gehalten ist.

Hierzu erkennt man zunächst in der Fig.1 eine Tragstruktur 15, die mit einer im Wesentlichen rechteckigen Öffnung 12 mit abgerundeten Ecken versehen ist, die in der gezeigten Gebrauchsstellung bzw. Haltestellung von dem Dekompressionsglied 11 vollständig überdeckt ist, wobei das Dekompressionsglied 11 an seiner der Verriegelungsanordnung 20 abgewandten Längsseite durch zwei Scharniere 14 verschwenkbar gehalten ist.

Für den Betrachter in der Fig.1 unterhalb des nach unten gewandten Randbereichs 16 des Dekompressionsglieds ist eine Kanalstruktur 26 gezeigt, in der bei normalem bestimmungsgemäßen Gebrauch eine konstante Luftströmung, bspw. eines nicht näher dargestellten Klimagerätes des Luftfahrzeugs, einen konstanten Druck auf das die Kanalstruktur 26 im Wesentlichen bildende Luftführungsteil 25 ausübt. Dieses ist mittels klammerartiger Haltemittel 17 an der Tragstruktur angeordnet und gehalten. Weiter ist das Luftführungsteil 25 als flaches, plattenartiges Bauteil mit einer im Wesentlichen gleichmäßigen Krümmung ausgebildet und weist in seiner Gebrauchsstellung eine vorbestimmte Vorspannung auf, die auf einen Auslösevorgang der Verriegelungsanordnung 20 folgenden Freigabevorgang unterstützt, wie weiter unten noch anschaulicher werden wird.

In der Darstellung der Fig.2 ist hierzu die Verriegelungsanordnung in größerer Detailgenauigkeit gezeigt. Dabei erkennt man, dass an der Tragstruktur 15 eine Mehrzahl von Verriegelungselementen 21 angeordnet ist, die sich entlang des Randbereichs 16 des Dekompressionsglieds 11 diesem benachbart angeordnet befinden.

Die Verriegelungselemente 21 sind nach Art eines Z-Profils ausgebildet und weisen einen in Richtung des Dekompressionsglieds 11 offenen Eingriff 24 auf, in welchen ein Vorsprung 23 eines Riegelteils 22 in Haltestellung des Dekompressionsglieds 11 eingreift.
Das in Richtung des Dekompressionsglieds gekrümmte Luftführungssteil 25 ist dabei an seinem freien Ende mit dem Vorsprung 23 versehen, der sich in seiner Gebrauchsstellung bzw. der Haltestellung des Dekompressionsglieds 11 von dem freien Ende des Luftführungsteils 25 weg ragend im Wesentlichen parallel zu Dekompressionsglied 11 und Tragstruktur 15 erstreckt.

Außerdem erkennt man an dem freien Ende des Luftführungsteils 25 eine Manschette 31 als Dämpfungsmittel 30, welche Manschette 31 die Stirnseite des Luftführungsteils 25 umgreift und sich in deren Randbereich an beiden Seitenflächen ein Stück weit von der Stirnseite weg verlaufend flächig erstreckt. Der an der Stirnseite des Luftführungsteils 25 maximale, in etwa tropfenförmige Querschnitt der Manschette 31 verjüngt sich von dem freien Ende des Luftführungsteils weg. An ihrer in Gebrauchsstellung nach unten weisenden Seite ist die Manschette 31 an den Vorsprung 23 angeformt, außerdem kontaktiert sie mit ihrer Stirnseite den Randbereich des Dekompressionsglieds 11 in einem Reibschluss. Das Dekompressionsglied 11 verharrt durch diesen Kontakt in seiner Haltestellung, da durch dessen Vorspannung der Vorsprung 23 in seinem Eingriff an die Innenseite des nach oben ragenden Teilprofils gedrückt wird, und hierdurch mit dem Profil des Verriegelungselements 21 der Verriegelungsanordnung 20 nicht außer Eingriff gerät.

In der Fig.2 erkennt man schließlich auch noch, dass sich an der Tragstruktur 15 für den Betrachter unterhalb der Verriegelungsanordnung 20 eine Anordnung wabenartiger Durchgriffe 13 befindet, über welche Luft aus dem dem Betrachter abgewandten Volumen eines Rumpfinnenraums in die Kanalstruktur 26 gezogen werden kann. Die Durchgriffe 13 sind dabei in ihrer Dimension so ausgelegt, dass eine Bedienperson mit ihren Fingern hindurch greifen kann und derart etwa das freie Ende des Luftführungsteils aus seiner Freigabestellung wieder in der Haltestellung festgelegt werden kann. Aus dem erwähnten Volumen in die Kanalstruktur 26 mittels eines Druckunterschieds eingeführte bzw. eingesaugte Luft wird von einem Führungselement 27, welches in die Kanalstruktur 26 ragt im Wesentlichen parallel zu deren Längserstreckung und nach oben abgeleitet, wie man in der Fig.3a besser erkennt, die im Übrigen die in den Fig.1 und 2 gezeigte Situation gleichermaßen abbildet.

In den Fig.3a-3d erkennt man den Auslösevorgang an einer Verriegelungsanordnung 20 der erfindungsgemäßen Dekompressionsvorrichtung 10 in zeitlicher Abfolge. In der Fig.3a ist dabei die Situation der Fig.1 und 2 gezeigt, in welcher sich das Dekompressionsglied 11 der Dekompressionsvorrichtung 10 in seiner Haltestellung befindet, und an der Verriegelungsanordnung 20 der Vorsprung 23 des Riegelteils 22 in den Eingriff 24 des Profils des Verriegelungselements 21 greift, wodurch die Stirnseite des freien Endes des Luftführungsteils 25 über ihrer Manschette 31 als Dämpfungsmittel den Randbereich 16 des Dekompressionsglieds 11 beaufschlagt und in der Haltestellung festlegt. Hierdurch ist das Dekompressionsglied 11 durch das Verriegelungselement 21 über Zusammenwirken mit dem Luftführungsteil 25 mittelbar in seiner Haltestellung gehalten.

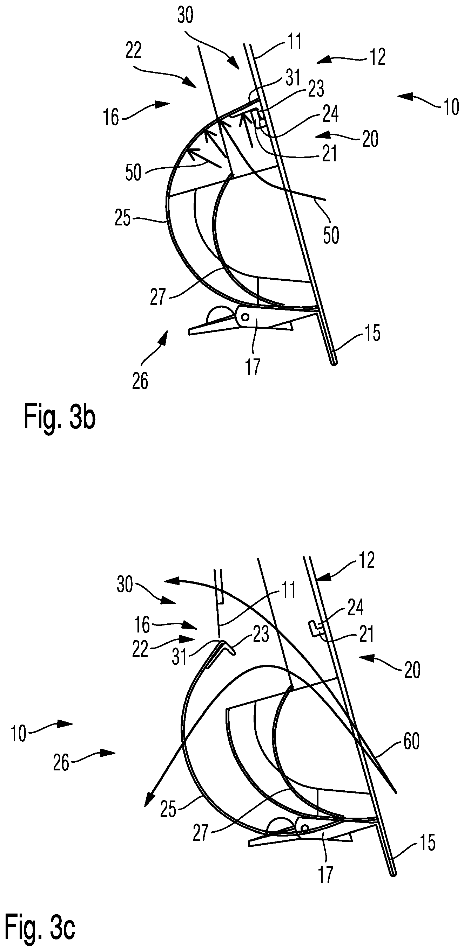

In der Fig. 3b ist der mechanische Zustand der Dekompressionsvorrichtung mit Blick auf die Anordnung ihrer Bestandteile unverändert, man erkennt die Pfeile 50, die den durch ein Differenzdruckereignis ausgeübten Druck auf den tragstrukturnahen Bereich des Luftführungsteils 25 sowie die Verriegelungsanordnung 20 bzw. die Anströmung dieser Teile symbolisieren sollen.

Durch den von der Strömung bzw. dem plötzlichen Differenzdruck ausgeübten Druck gerät in der Fig.3c der Vorsprung 23 des Riegelteils 22 außer Eingriff mit dem Profil 24 des Verriegelungselements 21, da sich das freie Ende des Luftführungsteils 25 mit seiner Manschette 31 trotz Reibschluss an dem Randbereich des Dekompressionsglieds 11 parallel zu diesem in etwa so lange bewegt, bis das das zu dem Vorsprung in Haltestellung parallele Teilprofilstück des Profils 24 das Luftführungsteil gegen dessen und die Vorspannung des Dekompressionsteils nicht länger halten kann. Die Fig.3c zeigt dem Moment, in welchem der zuvor beaufschlagte Randbereich 16 des Dekompressionsglieds beim Verschwenken in seine Freigabestellung gerade von dem ihn vorher haltenden Stirnbereich des Luftführungsteils 25 freikommt. Die Verriegelung ist dann freigegeben, hierdurch schwenkt das Dekompressionsglied 11 an seinen in der Fig.3c nicht gezeigten Scharnieren auf, während das Luftführungsteil 25 zum einen an dem Haltemittel 17 zurückschwenkt, gleichzeitig aber auch aus seiner vorgespannten in seine entspannte Krümmung entspannt wird. Diese Bewegungsumstände des Luftführungsteils 23 und des Dekompressionsglieds werden durch die Bewegungspfeile 60 symbolisiert.

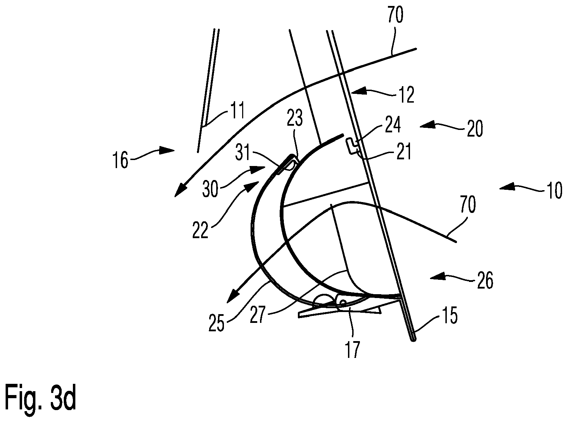

In der Fig.3d erkennt man schließlich die Dekompressionsvorrichtung 10 in der Freigabestellung des Dekompressionsglieds 11 mit gleichzeitig entspanntem Luftführungsteil 25. Die Pfeile 70 symbolisieren hier nach dem Druckdifferenzereignis möglichen Strömungswege zum Druckausgleich an den beiden Volumina, insbesondere durch die freigegebene Öffnung 12, aber auch durch eine an dem Luftführungsteil 25 in einem der Tragstruktur 15 zugewandten Bereich angeordnete Gitterstruktur 28.

Die vorstehend beschriebene Erfindung betrifft demnach eine Dekompressionsvorrichtung 10 mit wenigstens einem an einer Tragstruktur 15 angeordneten Dekompressionsglied 11, welches bei einem Differenzdruckereignis vorbestimmbarer Höhe eine Öffnung 12 in der Tragstruktur 15 als Verbindung zwischen zwei Volumina freigibt, wobei das Dekompressionsglied 11 zwischen einer die Öffnung 12 verschließenden Haltestellung und einer die Öffnung 12 freigebenden Freigabestellung bewegbar ist, und mit einer Verriegelungsanordnung 20, welche das Dekompressionsglied 11 bei Gebrauch in der Haltestellung festlegt.

Um eine günstig herstellbare Dekompressionsvorrichtung 10 zur Verfügung zu haben, die einfach zu montieren und zu warten sind, und bei geringem Gewicht eine flexible Verriegelung und Auslösung gewährleistet, wird vorgeschlagen, die Verriegelungsanordnung mit wenigstens einem Verriegelungselement 21 zu versehen, welches an der Tragstruktur 15 angeordnet ist und das Dekompressionsglied 11 durch das Verriegelungselement 21 über Zusammenwirken mit einem Luftführungsteil 25 mittelbar in der Haltestellung zu halten.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise im Rahmen der beigefügten Ansprüche verändern oder modifizieren, ohne vom Kern der Erfindung abzuweichen.

### Bezugszeichenliste

- 10: Dekompressionsvorrichtung
- 11: Dekompressionsglied
- 12: Öffnung
- 13: wabenartiger Durchgriff
- 14: Scharnier
- 15: Tragstruktur
- 16: Randbereich
- 17: klammerartiges Haltemittel
- 20: Verriegelungsanordnung
- 21: Verriegelungselement
- 22: Riegelteil
- 23: Vorsprung
- 24: Eingriff
- 25: Luftführungsteil
- 26: Kanalanordnung
- 27: Führungselement
- 28: Gitterstruktur
- 30: Dämpfungsmittel
- 31: Manschette
- 50: Pfeil (Drucksymbolisierung)
- 60: Pfeil (Bewegungssymbolisierung)
- 70: Pfeil (Strömungssymbolisierung)

## Patentansprüche

1. Dekompressionsvorrichtung (10) mit einer Tragstruktur (15) und mit wenigstens einem an der Tragstruktur (15) angeordneten Dekompressionsglied (11), welches bei einem Differenzdruckereignis vorbestimmbarer Höhe eine Öffnung (12) in der Tragstruktur (15) als Verbindung zwischen zwei Volumina freigibt,
wobei das Dekompressionsglied (11) zwischen einer die Öffnung (12) verschließenden Haltestellung und einer die Öffnung (12) freigebenden Freigabestellung bewegbar ist, und
mit einer Verriegelungsanordnung (20), welche das Dekompressionsglied (11) bei Gebrauch in der Haltestellung festlegt,
wobei die Verriegelungsanordnung (20) mit wenigstens einem Verriegelungselement (21) versehen ist, welches an der Tragstruktur (15) angeordnet ist,
wobei das Dekompressionsglied (11) durch das Verriegelungselement (21) über Zusammenwirken mit einem Luftführungsteil (25) der Dekompressionsvorrichtung (10), welches nachgiebig und/oder federelastisch ausgebildet ist und in Haltestellung in Richtung des Dekompressionsglieds (11) gekrümmt oder gebogen ist, mittelbar in der Haltestellung gehalten ist,
wobei das Luftführungsteil (25) zur Bildung von Kanälen für Luftströmungen als ein im Wesentlichen flaches, plattenartiges Bauteil ausgebildet ist, dessen festes Ende mit der Tragstruktur (15) verbunden ist,
wobei das wenigstens eine Verriegelungselement (21) der Verriegelungsanordnung (20) durch ein z-förmiges Profil gebildet ist, welches mit der Tragstruktur (15) wenigstens einen Eingriff (24) bildet,
wobei das Luftführungsteil (25) an seinem freien Ende ein Riegelteil (22) aufweist, das in der Haltestellung mit dem Verriegelungselement (21) in Eingriff steht und zusammen mit diesem die Verriegelungsanordnung (20) bildet, und
wobei das Riegelteil (22) durch einen Zapfen oder dergleichen von dem freien Ende des Luftführungsteils weg ragenden Vorsprung (23) gebildet ist, der in Haltestellung in den durch das Profil und die Tragstruktur (15) gebildeten Eingriff (24) des Verriegelungselements (21) greift.

2. Dekompressionsvorrichtung nach Anspruch 1, **dadurch gekennzeichnet, dass** das wenigstens eine Verriegelungselement (21) der Verriegelungsanordnung (20) an derjenigen Seite der Tragstruktur (15) angeordnet ist, in deren Richtung das Dekompressionsglied (11) in die Freigabestellung bewegbar oder bewegt ist.

3. Dekompressionsvorrichtung nach Anspruch 1 oder 2, **dadurch gekennzeichnet, dass** das wenigstens eine Verriegelungselement (21) an der Tragstruktur (15) befestigt oder festgehalten ist oder an der Tragstruktur (15) angeformt ist oder als Teil der Tragstruktur (15) mit dieser integral ausgebildet ist.

4. Dekompressionsvorrichtung nach einem der vorhergehenden Ansprüche, **dadurch gekennzeichnet, dass** das wenigstens eine Verriegelungselement (21) mit einem Eingriff (24) in Haltestellung eine Steck-, Schnapp oder Rastverbindung eingeht.

5. Dekompressionsvorrichtung nach einem der vorhergehenden Ansprüche, **dadurch gekennzeichnet, dass** eine Mehrzahl von Verriegelungselementen (21) an der Verriegelungsanordnung (20) vorgesehen ist, die an der Tragstruktur (15) beabstandet angeordnet sind.

6. Dekompressionsvorrichtung nach einem der vorhergehenden Ansprüche, **dadurch gekennzeichnet, dass** das Dekompressionsglied (11) in der Haltestellung vorgespannt ist.

7. Dekompressionsvorrichtung nach einem der vorhergehenden Ansprüche, **dadurch gekennzeichnet, dass** das Dekompressionsglied (11) zwischen der Haltestellung und der Freigabestellung verschwenkbar vorgesehen ist.

8. Dekompressionsvorrichtung nach einem der vorhergehenden Ansprüche, **dadurch gekennzeichnet, dass** das Luftführungsteil (25) an seinem freien Ende ein Dämpfungsmittel (30) aufweist, welches seine Stirnseite umgreift und in der Haltestellung des Dekompressionsglieds (11) dessen Randbereich (16) kontaktiert.

9. Dekompressionsvorrichtung nach Anspruch 8, **dadurch gekennzeichnet, dass** das Dämpfungsmittel (30) in Anlage mit dem Dekompressionsglied (11) über dessen Breite wenigstens einen einstellbaren Reibschluss, insbesondere genau einen einstellbaren Reibschluss, bildet.

10. Dekompressionsvorrichtung nach Anspruch 8 oder 9, **dadurch gekennzeichnet, dass** das Dämpfungsmittel (30) und das Riegelteil (22) an dem freien Ende des Luftführungsteils (25) angeformt sind, und diese miteinander in Anlage stehen, miteinander verbunden sind und/oder einstückig ausgebildet sind.

## Claims

1. Decompression device (10) having a supporting structure (15) and having at least one decompression member (11) which is arranged on the supporting structure (15) and, upon a differential pressure event of predeterminable magnitude, releases an opening (12) in the supporting structure (15) as a connection between two volumes, wherein the decompression member (11) is movable between a holding position closing the opening (12) and a release position releasing the opening (12), and having a locking arrangement (20) which secures the decompression member (11) in the holding position during use, wherein the locking arrangement (20) is provided with at least one locking element (21) which is arranged on the supporting structure (15), wherein the decompression member (11) is held indirectly in the holding position by the locking element (21) via interaction with an air-guiding part (25) of the decompression device (10), which air-guiding part is of flexible and/or spring-elastic design and is curved or bent in the direction of the decompression member (11) in the holding position, wherein the air-guiding part (25), in order to form channels for air flows, is designed as a substantially flat, plate-like component, the fixed end of which is connected to the supporting structure (15), wherein the at least one locking element (21) of the locking arrangement (20) is formed by a z-shaped profile which forms at least one engagement (24) with the supporting structure (15), wherein the free end of the air-guiding part (25) has a bolt part (22) which, in the holding position, is in engagement with the locking element (21) and, together therewith, forms the locking arrangement (20), and wherein the bolt part (22) is formed by a pin or similar projection (23) which protrudes away from the free end of the air-guiding part and, in the holding position, engages in the engagement (24) of the locking element (21), said engagement being formed by the profile and the supporting structure (15).

2. Decompression device according to Claim 1, **characterized in that** the at least one locking element (21) of the locking arrangement (20) is arranged on that side of the supporting structure (15), in the direction of which the decompression member (11) is movable or moved into the release position.

3. Decompression device according to Claim 1 or 2, **characterized in that** the at least one locking element (21) is fastened or secured to the supporting structure (15) or is integrally formed on the supporting structure (15) or is formed integrally with the supporting structure (15) as part of the latter.

4. Decompression device according to one of the preceding claims, **characterized in that** the at least one locking element (21) enters into a plug-in, snap-in or latching connection with an engagement (24) in the holding position.

5. Decompression device according to one of the preceding claims, **characterized in that** a plurality of locking elements (21) are provided on the locking arrangement (20) and are arranged spaced apart on the supporting structure (15).

6. Decompression device according to one of the preceding claims, **characterized in that** the decompression member (11) is prestressed in the holding position.

7. Decompression device according to one of the preceding claims, **characterized in that** the decompression member (11) is provided pivotably between the holding position and the release position.

8. Decompression device according to one of the preceding claims, **characterized in that** the free end of the air-guiding part (25) has a damping means (30) which engages around the end side thereof and makes contact with the edge region (16) of the decompression member (11) in the holding position thereof.

9. Decompression device according to Claim 8, **characterized in that** the damping means (30) in contact with the decompression member (11) over the width thereof forms at least one adjustable frictional connection, in particular precisely one adjustable frictional connection.

10. Decompression device according to Claim 8 or 9, **characterized in that** the damping means (30) and the bolt element (22) are integrally formed at the free end of the air-guiding part (25) and said damping means and bolt part are in contact with one another, are connected to one another and/or are formed integrally.

## Revendications

1. Dispositif de décompression (10) comprenant
une structure de support (15) et
au moins un élément de décompression (11) qui est disposé au niveau de la structure de support (15) et qui libère une ouverture (12) dans la structure de support (15) sous la forme d'une liaison entre deux volumes lorsqu'il se produit une pression différentielle de niveau prédéterminé,
l'élément de décompression (11) étant mobile entre une position de maintien dans laquelle l'ouverture (12) est fermée et une position de libération dans laquelle l'ouverture (12) est libérée, et
un dispositif de verrouillage (20) qui fixe l'élément de décompression (11) dans la position de maintien lors de l'utilisation,
le dispositif de verrouillage (20) étant pourvu d'au moins un élément de verrouillage (21) qui est disposé au niveau de la structure de support (15),
l'élément de décompression (11) étant maintenu indirectement dans la position de maintien par le biais de l'élément de verrouillage (21) en coopération avec une partie de guidage d'air (25) du dispositif de décompression (10), laquelle est flexible et/ou élastique et est incurvée ou pliée dans la position de maintien en direction de l'élément de décompression (11),
la partie de guidage d'air (25) étant conçue comme un composant en forme de plaque sensiblement plat pour former des conduits destinés à des flux d'air, l'extrémité fixe dudit composant étant reliée à la structure de support (15),
l'au moins un élément de verrouillage (21) de l'ensemble de verrouillage (20) étant formé par un profilé en forme de Z qui forme au moins un engagement (24) avec la structure de support (15),
la partie de guidage d'air (25) comportant à son extrémité libre une partie de verrouillage (22) qui, dans la position de maintien, est en engagement avec l'élément de verrouillage (21) et forme conjointement avec celui-ci l'ensemble de verrouillage (20), et
la partie de verrouillage (22) étant formée par une goupille ou une saillie (23), saillant de l'extrémité libre de la partie de guidage d'air, laquelle vient dans la position de maintien dans l'engagement (24) de l'élément de verrouillage (21) qui est formé par le profilé et la structure de support (15) .

2. Dispositif de décompression selon la revendication 1, **caractérisé en ce que** l'au moins un élément de verrouillage (21) de l'ensemble de verrouillage (20) est disposé du côté de la structure de support (15) en direction duquel l'élément de décompression (11) est déplacé ou peut être déplacé jusque dans la position de libération.

3. Dispositif de décompression selon la revendication 1 ou 2, **caractérisé en ce que** l'au moins un élément de verrouillage (21) est fixé ou maintenu sur la structure de support (15) ou est moulé sur la structure de support (15) ou fait partie intégrante de celle-ci en tant que partie de la structure de support (15).

4. Dispositif de décompression selon l'une des revendications précédentes, **caractérisé en ce que** l'au moins un élément de verrouillage (21) établit dans la position de maintien une liaison par enfichage, enclenchement ou encliquetage avec un engagement (24).

5. Dispositif de décompression selon l'une des revendications précédentes, **caractérisé en ce qu'**une pluralité d'éléments de verrouillage (21) sont prévus sur l'ensemble de verrouillage (20) qui sont disposés de manière espacée sur la structure de support (15).

6. Dispositif de décompression selon l'une des revendications précédentes, **caractérisé en ce que** l'élément de décompression (11) est précontraint dans la position de maintien.

7. Dispositif de décompression selon l'une des revendications précédentes, **caractérisé en ce que** l'élément de décompression (11) est prévu de manière pivotante entre la position de maintien et la position de libération.

8. Dispositif de décompression selon l'une des revendications précédentes, **caractérisé en ce que** la partie de guidage d'air (25) comporte à son extrémité libre un moyen d'amortissement (30) qui s'engage autour de sa face d'extrémité et qui vient en contact, dans la position de maintien de l'élément de décompression (11), avec la zone de bord (16) de celui-ci.

9. Dispositif de décompression selon la revendication 8, **caractérisé en ce que** le moyen d'amortissement (30) forme, en appui avec l'élément de décompression (11) sur la largeur de celui-ci, au moins une liaison à friction réglable, notamment exactement une liaison à friction réglable.

10. Dispositif de décompression selon la revendication 8 ou 9, **caractérisé en ce que**
le moyen d'amortissement (30) et la partie de verrouillage (22) sont formés sur l'extrémité libre de la partie de guidage d'air (25), et ceux-ci sont en appui l'un avec l'autre, sont reliés l'un à l'autre et/ou sont formés d'une seule pièce.
